# FASCICULE DE BREVET EUROPEEN

(11) **EP 3 075 614 B1**
(45) Date de publication et mention de la délivrance du brevet: **06.06.2018**
(21) Numéro de dépôt: 16157007.2
(22) Date de dépôt: 23.02.2016
(51) Int. Cl.: B60S 1/38, B60S 1/52

(54) **CONNEXION HYDRAULIQUE SIMPLIFIÉE POUR UN SYSTÈME D'ESSUYAGE D'UNE VITRE D'UN VÉHICULE**
VEREINFACHTER HYDRAULISCHER ANSCHLUSS FÜR EIN WISCHERSYSTEM EINER FAHRZEUGSCHEIBE
SIMPLIFIED HYDRAULIC CONNECTION FOR A WINDSCREEN-WIPER SYSTEM OF A VEHICLE

(30) Priorité: 03.04.2015 FR 1552891
(43) Date de publication de la demande: 05.10.2016
(73) Titulaire: Valeo Systèmes d'Essuyage, 78322 Le Mesnil Saint Denis (FR)
(72) Inventeur: BOUSSET, Xavier, 63115 MEZEL (FR)
(74) Mandataire: Callu Danseux, Violaine

(56) Documents cités:
- EP-A1- 2 402 222
- EP-A1- 2 607 187
- US-A1- 2014 196 240

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par un porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions, le balai est rattaché au porte-balai tournant de l'essuie-glace par un ensemble constitué d'un connecteur mécanique et d'un adaptateur. Le connecteur mécanique est une pièce qui est sertie sur le palonnier ou directement sur le balai plat, alors que l'adaptateur est une pièce intermédiaire qui permet la fixation du connecteur sur le porte-balai de l'essuie-glace. Ces deux pièces sont reliées l'une à l'autre par un axe transversal qui autorise leur rotation relative, dans un plan perpendiculaire au pare-brise passant par le porte-balai.

Les essuie-glaces sont également équipés de dispositifs d'amenée d'un liquide lave-vitre qui est acheminé depuis un réservoir situé sur le véhicule et qui est pulvérisé en direction du pare-brise par des buses situées soit autour du pare-brise, soit sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur le porte-balai de l'essuie-glace. Celles-ci sont raccordées au système de distribution du balai au niveau du connecteur mécanique par une pièce rigide, dite connecteur hydraulique. Les canalisations, qui sont généralement souples sont au nombre, soit de un pour n'assurer le nettoyage que lors de l'aller, soit de deux pour assurer le nettoyage tant lors de l'aller et que du retour du balai. Elles débouchent dans le connecteur hydraulique, qui se fixe sur le connecteur mécanique par des embouts appropriés et qui assure la nécessaire étanchéité avec lui. Le connecteur mécanique comporte ainsi des orifices aptes à recevoir, par une liaison étanche, lesdits embouts du connecteur hydraulique.

Alors que les canalisations de liquide et le connecteur hydraulique sont généralement liés au porte-balai de l'essuie-glace, le connecteur mécanique est lié au balai et il est nécessaire d'assurer le branchement du connecteur hydraulique, et accessoirement du connecteur électrique, sur le connecteur mécanique lors d'un changement de balai. Cette opération s'effectue généralement dans une position, dite de service, dans laquelle le balai est positionné par rapport au porte-balai de manière à former un angle, par une rotation autour de l'axe transversal reliant le connecteur mécanique à l'adaptateur.

Le document EP-2460700-B1, qui représente la technique antérieure à la présente invention et dont est issue la figure 2, montre une réalisation de connecteur mécanique qui reçoit un connecteur hydraulique au travers duquel passe le liquide lave-vitre. Il montre également un connecteur électrique qui fournit le connecteur mécanique en électricité.

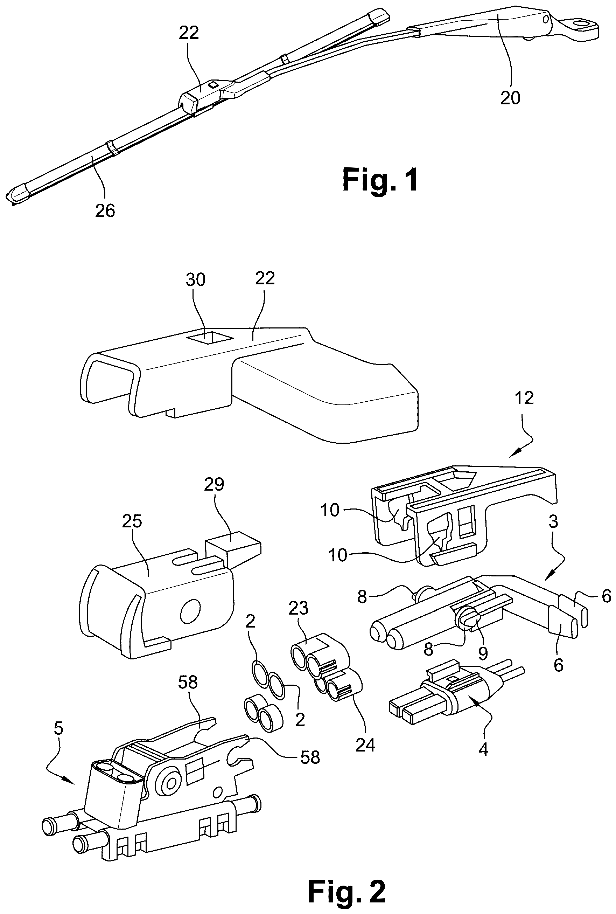

Dans cet art antérieur, illustré par les figures 1 à 4, l'étanchéité entre le connecteur hydraulique 3 et le connecteur mécanique 5 est assurée par deux joints toriques 2 qui entourent, chacun, une extrémité des canalisations 6 et qui viennent se loger dans des alésages pratiqués dans le corps du connecteur mécanique 5. Une fois le connecteur hydraulique 3 mis en place dans le connecteur mécanique 5, les joints toriques 2 sont maintenus en place par des bloqueurs 23 en forme de cylindres coulissant sur ces canalisations. Pour cela leur diamètre intérieur correspond sensiblement au diamètre extérieur des canalisations 6 et leur diamètre extérieur correspond sensiblement au diamètre intérieur des alésages du connecteur mécanique. Ces diamètres sont choisis de façon que les bloqueurs 23 coulissent dans lesdits alésages et qu'ils restent solidaires des canalisations 6 par friction. Chaque joint torique 2 est ainsi maintenu en place à l'intérieur des alésages en étant coincés entre le bloqueur 23 correspond et un épaulement pratiqué au fond de l'alésage dans lequel il est inséré.

Cette technologie présente toutefois l'inconvénient de nécessiter une pièce, telle qu'un bloqueur, pour maintenir le joint torique en place, ce qui entraîne des coûts liés à la fabrication de cet élément et aux manipulations supplémentaires pour le mettre en place. Il est donc apparu utile de réduire les coûts associés en proposant une technologie plus simple, ce qui est l'objet de la présente invention.

Elle propose à cet effet un connecteur hydraulique pour un système d'essuyage d'une vitre d'un véhicule, comportant au moins une canalisation de circulation d'un liquide lave-vitre dont une extrémité est configurée pour s'insérer selon une direction dite axiale dans un alésage d'un autre élément dudit système, caractérisé en ce que ladite extrémité comporte des moyens d'appui et de serrage axial configurés pour coopérer avec un joint d'étanchéité destiné à être monté dans ledit alésage.

Les moyens d'appui et de serrage portés par la canalisation forment un moyen de blocage du joint qui est associé de façon définitive au connecteur hydraulique et qui évite d'avoir à installer un moyen de blocage spécifique pour comprimer le joint.

Avantageusement lesdits moyens comprennent au moins une surépaisseur radiale.

De façon plus avantageuse ladite surépaisseur comporte au moins une face annulaire de butée pour ledit joint.

Dans une forme particulière de réalisation ladite face de butée est positionnée à une extrémité axiale de la canalisation. Cette configuration est adaptée pour une étanchéité positionnée en fond de l'alésage d'un connecteur mécanique.

Dans une autre forme de réalisation ladite face de butée est positionnée à distance d'une extrémité axiale de ladite canalisation. Cette configuration est adaptée pour une étanchéité positionnée en surface du connecteur mécanique.

Avantageusement ladite face de butée a une forme en tronc de cône.

Préférentiellement le connecteur hydraulique comprend en outre, à distance de ladite extrémité des moyens d'encliquetage élastique configurés pour coopérer avec des moyens complémentaires dudit un autre élément. Cette configuration permet de prédéfinir un taux de compression pour le joint en jouant sur la distance existant entre ces moyens d'encliquetage et les moyens d'appui et de serrage axial.

L'invention porte également sur un ensemble formé d'un connecteur hydraulique tel que décrit ci-dessus, d'un connecteur mécanique et d'un joint annulaire d'étanchéité, par exemple torique ou à section carrée, ledit connecteur mécanique comportant un alésage muni d'un épaulement, , ledit joint étant configuré pour être serré entre ledit épaulement du connecteur mécanique et lesdits moyens d'appui et de serrage dudit connecteur hydraulique, lorsque ladite extrémité de la canalisation est insérée dans ledit alésage.

Avantageusement les diamètres intérieur et extérieur du joint torique sont sensiblement égaux à ceux, respectivement, de l'alésage et de l'épaulement.

De façon préférentielle le connecteur mécanique porte des premiers moyens de support aptes à coopérer avec des seconds moyens de support portés par le connecteur hydraulique pour immobiliser ledit connecteur hydraulique en translation longitudinale par rapport audit connecteur mécanique, la distance entre lesdits premiers moyens de support et l'épaulement de l'alésage étant telle que la coopération des premiers et seconds moyens de support entraîne une compression, à un taux prédéfini, du joint d'étanchéité contre ledit épaulement. On assure ainsi automatiquement la bonne compression du joint qui garantit à la fois l'étanchéité et une absence de dommage du joint.

Dans un premier mode de réalisation ladite face de butée est positionnée à ladite extrémité de la canalisation et l'épaulement est positionné en fond de l'alésage.

Dans un second mode de réalisation ladite face de butée est positionnée à distance de ladite extrémité de la canalisation et l'épaulement forme une rainure dans une face interne dudit connecteur mécanique.

De façon préférentielle ledit alésage comporte un bourrelet annulaire de retenue axiale du joint. Ceci permet une mise en place et un retrait du connecteur hydraulique sans avoir à maintenir le joint en place

L'invention porte enfin sur un balai d'essuie-glace d'un véhicule, caractérisé en ce qu'il comprend un ensemble tel que décrit ci-dessus pour son alimentation en liquide lave-vitre.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue générale, en perspective, d'un système d'essuie-glace pour une vitre d'un véhicule automobile ;
- la figure 2 est une vue éclatée des éléments constitutifs du système de la figure 1, selon l'art antérieur :
- les figures 3 et 4 sont des vues, respectivement en perspective et en coupe, du connecteur mécanique et du connecteur hydraulique de la figure 2;
- la figure 5 est une vue, en perspective, d'un mode de réalisation d'un connecteur mécanique et d'un connecteur hydraulique selon un premier mode de réalisation de l'invention, en position désassemblés ;
- la figure 6 est une vue partielle en coupe du connecteur hydraulique et du connecteur mécanique de la figure 5, en position assemblés ;
- la figure 7 est une vue de détail, en perspective, d'un élément de la figure 6, et
- la figure 8 est une vue de détail, en coupe, d'une variante du premier mode de réalisation ;
- la figure 9 est une vue en coupe d'un second mode de réalisation de l'invention.

Il faut noter que les figures exposent l'invention de manière détaillée et qu'elles peuvent, bien entendu, servir à mieux définir l'invention, le cas échéant.

Dans la suite de la description, les dénominations longitudinales ou latérales se réfèrent à l'orientation du porte-balai sur lequel est monté le balai d'essuie-glace. La direction longitudinale correspond à l'axe principal du porte-balai dans lequel il s'étend et, plus particulièrement, à la direction d'introduction des canalisations du connecteur hydraulique dans les alésages du connecteur mécanique. Les dénominations externe ou interne se réfèrent, dans la direction longitudinale, à un éloignement plus ou moins grand par rapport au point de rotation du balai. Les termes axial et radial se rapportent à la direction d'introduction du connecteur hydraulique dans le connecteur mécanique.

En se référant à la figure 1, on voit un essuie-glace générique composé d'un porte-balai ou bras 20 se prolongeant à son extrémité externe par une pièce terminale 22, qui est fixée, du côté interne, par un sertissage sur le porte-balai 20. La pièce terminale 22 recouvre un adaptateur qui est porteur du balai 26 par l'intermédiaire d'un connecteur mécanique 5.

En se référant maintenant à la figure 2, on voit, tout d'abord, la pièce terminale 22 du porte-balai 20 qui présente une forme en « U » renversé où l'ouverture de cette forme en « U » fait face au pare-brise. On voit ensuite un adaptateur 25 qui a vocation à s'insérer dans la pièce terminale 22 par un mouvement de translation selon un axe longitudinal, pour venir dans la position d'utilisation, où il est positionné en butée contre une forme coopérante donnée à la pièce terminale 22. Il y est alors fixé de façon réversible au moyen d'un bouton escamotable 29 de verrouillage, qui coopère avec un évidement 30 pratiqué à cet effet dans la partie supérieure de la pièce terminale 22.

Sur chaque branche latérale de la pièce terminale 22 est fixé un moyen de support 12 dont la fonction est de porter le connecteur hydraulique 3 et de le retenir en translation lors du retrait du balai 26, tout en autorisant d'autres mouvements. Le moyen de support 12 présente la forme d'une chape, qui reste fixée à demeure sur la pièce terminale 22 en se logeant contre la surface interne de celle-ci. Le moyen de support 12 comprend sur ses faces latérales des découpes 10 dans lesquelles peuvent se déplacer des excroissances 9 portées par le connecteur hydraulique 3.

On voit enfin un connecteur mécanique 5, qui est solidarisé de manière indémontable sur le balai 26, et dans lequel viennent s'emboîter le connecteur hydraulique 3 et un connecteur électrique 4, celui-ci étant généralement fixé sur le connecteur hydraulique 3. Le connecteur hydraulique 3 assure l'approvisionnement en liquide lave-vitre du connecteur mécanique 5 et le connecteur électrique 4 apporte la puissance électrique nécessaire au fonctionnement d'au moins un élément chauffant intégré au balai 26.

Le connecteur hydraulique 3 se présente sous la forme de deux canalisations 6 positionnées en parallèle longitudinalement et reliées mécaniquement l'une à l'autre. Le connecteur hydraulique 3 comporte en outre deux tourillons latéraux 8 qui portent eux-mêmes les excroissances latérales 9. Les tourillons 8 ont pour objet de servir de moyen de blocage en translation selon la direction longitudinale pour le connecteur hydraulique 3 lors de son insertion dans le connecteur mécanique 5. A cette fin le connecteur mécanique comporte deux moyens de blocage 58 qui ont pour fonction de coopérer, par encliquetage de ceux-ci, avec les tourillons 8 du connecteur hydraulique 3 et d'empêcher celui-ci de se désolidariser intempestivement du connecteur mécanique 5. Ces moyens de support ont, sans que cette forme soit impérative, la forme de deux pinces qui s'étendent longitudinalement de part et d'autre du connecteur mécanique 5 à partir de sa face interne. Chaque pince est constituée de deux branches planes, qui sont orientées longitudinalement et qui se font face dans un plan transversal. Chaque pince est découpée dans son plan par une ouverture circulaire qui a sensiblement le même diamètre que le tourillon 8 et ses deux branches se rapprochent l'une de l'autre à leur extrémité interne pour laisser passer, par déformation élastique, le tourillon 8 lors de son introduction ou de son retrait et pour le retenir par la suite.

Les canalisations 6 comportent chacune deux secteurs, respectivement interne et externe, qui s'étendent selon des directions orientées angulairement l'une par rapport à l'autre, la jonction entre ces secteurs formant un coude. Une telle structure permet d'adapter la forme des canalisations 6 à la forme de la pièce terminale 22 sous laquelle elles sont placées.

Du côté interne, ces canalisations 6 comportent chacune un raccord à ressaut, ou à épaulement, sur lesquels viennent s'emmancher des tuyaux souples d'alimentation en liquide lave-vitre, qui courent le long du porte-balai 20 et qui sont reliés au réservoir de liquide. Du côté externe, chacune des canalisations 6 a une forme cylindrique apte à s'insérer dans un orifice du connecteur mécanique 5.

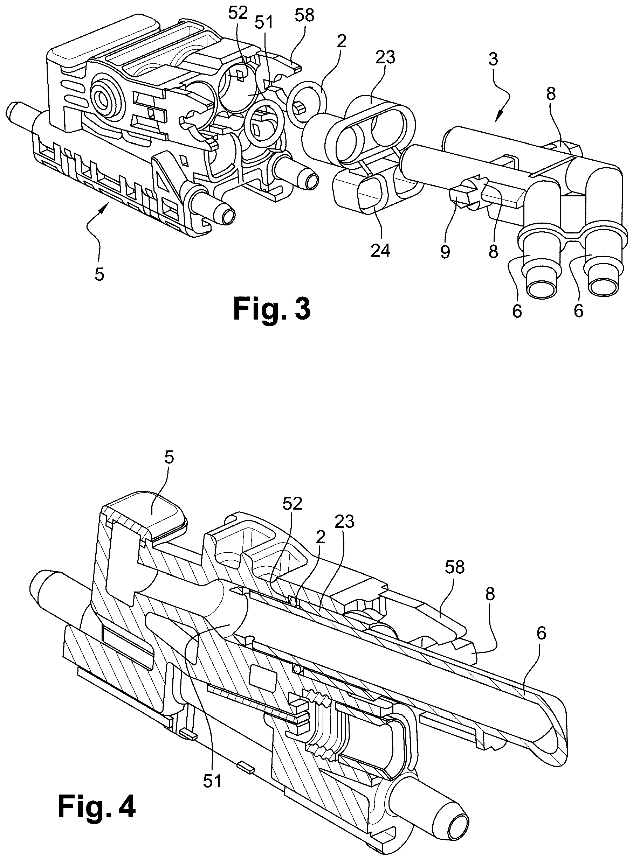

Comme indiqué précédemment, des joints toriques 2 sont placés à proximité de cette extrémité externe pour assurer l'étanchéité entre les canalisations 6 et les orifices dans lesquelles elles pénètrent. Ils sont maintenus en place par des bloqueurs 23. De la même façon, des joints sont utilisés pour le circuit électrique, pour assurer l'étanchéité électrique avec l'extérieur pour la liaison entre le connecteur électrique 4 et le connecteur mécanique 5. Les joints ne sont pas représentés dans la figure 3 mais on les voit dans la figure 4. Ils sont en section de forme rectangulaire ou carré. A ces joints sont associés d'autres bloqueurs 24 qui maintiennent les joints précités en place, comme le font les bloqueurs 23.

Les figures 3 et 4 montrent de manière plus détaillée le positionnement des joints toriques 2 dans le connecteur mécanique 5, en perspective (figure 3) et en coupe au niveau du plan médian d'une canalisation 6 (figure 4). On voit que la canalisation 6 s'insère profondément dans un alésage d'alimentation 51 du connecteur mécanique 5 en liquide lave-vitre et que le joint torique d'étanchéité 2, qui entoure la canalisation 6, est poussé, par le bloqueur 23, contre un épaulement 52 pratiqué au fond de l'alésage d'alimentation 51. Cet épaulement est formé par une simple augmentation du diamètre de cet alésage 51, qui comporte ainsi deux diamètres différents, selon que l'on se situe en amont et en aval dudit épaulement. La partie à plus grand diamètre est celle qui fait face au connecteur hydraulique 3 et à sa canalisation 6 et qui donc peut recevoir une surépaisseur placée autour de la canalisation, comme celle formée par le bloqueur 23.

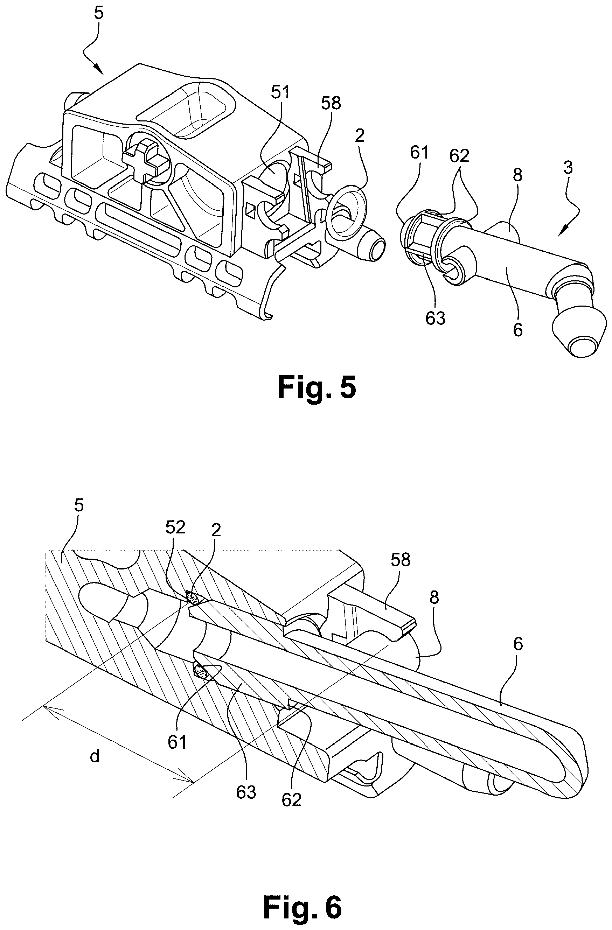

En se référant maintenant à la figure 5 on voit une liaison hydraulique selon l'invention, entre le connecteur hydraulique 3 et le connecteur mécanique 5. Cette liaison est décrite dans le cas d'un connecteur 5 ne recevant du liquide lave-vitre que d'une seule canalisation 6, la projection de liquide de lavage ne s'effectuant alors que lors de l'aller du balai. Il est bien évident que cette liaison peut être mise en oeuvre sur un connecteur mécanique 5 qui reçoit du liquide de deux canalisations 6, le lavage s'effectuant lors de l'aller et lors du retour du balai.

A la différence de l'art antérieur, la canalisation 6 n'est pas strictement cylindrique sur sa partie externe terminale, c'est-à-dire sur sa partie qui s'insère dans l'alésage 51 du connecteur mécanique 5. Elle présente, a contrario, une surépaisseur 61 à son extrémité externe, qui se termine, par ailleurs, toujours du côté externe, par une face de butée pour un joint torique 2. Telle que représentée cette surépaisseur 61, qui est mieux visible sur la figure 6, a la forme d'un tronc de cône 61 qui s'évase en partant de l'extrémité externe de la canalisation 6 et en s'éloignant du connecteur mécanique 5. Pour des raisons de guidage de l'extrémité de la canalisation 6 lors de son insertion dans l'alésage 51 du connecteur mécanique 5, cette surépaisseur se prolonge longitudinalement sur une certaine distance le long de la canalisation 6. Elle peut, par exemple, comme illustré sur la figure 5, prendre la forme de deux collerettes 62 qui sont reliées l'une à l'autre par des nervures longitudinales 63, la collerette la plus externe se prolongeant par le tronc de cône 61 pour former la butée du joint torique 2.

Parallèlement, et comme dans l'art antérieur, l'alésage 51 comporte un épaulement 52, qui résulte d'une augmentation de son diamètre du côté de la canalisation 6 et qui forme une butée contre laquelle vient se loger le joint torique 2. Celui-ci est ainsi bloqué entre, d'une part, l'épaulement 52 de l'alésage 51 du connecteur mécanique 5 et, d'autre part, le tronc de cône 61 en extrémité externe du connecteur hydraulique 3. Une pression adaptée du connecteur hydraulique 3 contre le connecteur mécanique 5 assure une compression du joint torique 2 et donc l'étanchéité du circuit hydraulique lors de son passage entre le connecteur hydraulique et le connecteur mécanique.

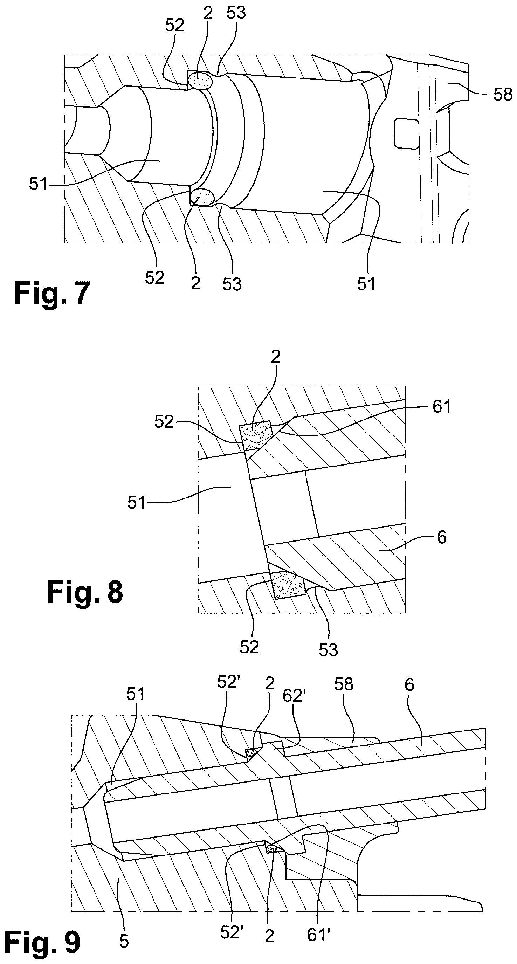

Par ailleurs, comme on peut le voir sur la figure 7, l'alésage 51 comporte sur sa partie à plus grand diamètre, à une distance de l'épaulement 52 qui correspond sensiblement au diamètre de la section du tore du joint 2, un bourrelet annulaire 53 obtenu par une restriction diamétrale, qui forme une butée contre le retrait du joint torique 2 une fois qu'il a été mis en place. La distance comprise entre l'épaulement 52 et le bourrelet annulaire 53 constitue ainsi un logement pour le joint torique, qui peut rester en place même en cas de retrait du connecteur hydraulique 3.

La figure 8 montre une variante de l'invention dans laquelle la section du joint torique 2 n'est plus circulaire mais carrée. L'étanchéité au niveau du connecteur hydraulique 3 reste assurée par la compression du joint 2 contre le tronc de cône 61 de ce connecteur.

En se référant à nouveau à la figure 6, on voit une configuration particulière de l'invention qui permet de garantir une bonne compression du joint torique 2 contre l'épaulement 52 du connecteur mécanique lors de la mise en place du connecteur hydraulique 3 sur ce connecteur mécanique 5. Pour cela le tourillon 8 est positionné à une distance particulière "d" de l'extrémité externe de la canalisation 6, c'est-à-dire du tronc de cône 61. Cette distance est telle, selon l'invention, que lorsque le tourillon 8 entre dans l'ouverture circulaire de la pince 58 correspondante et s'y positionne, le tronc de cône 61 est en appui contre le joint torique et le comprime. De la sorte on est certain, lorsqu'on enclenche les tourillons 8 dans les pinces 58, que le joint torique 2 est bien positionné et correctement comprimé. La jonction entre les deux connecteurs est alors assurée, tant sur les plans mécanique qu'hydraulique. D'après le principe de fonctionnement d'un joint torique, l'étanchéité se crée par la pression du fluide. La compression du joint créée par l'assemblage garantie l'étanchéité quasi statique, c'est-à-dire lorsque la pression du fluide est faible.

Enfin, la figure 9 montre un second mode de réalisation de l'invention. On retrouve sur cette figure les mêmes éléments que ceux de la figure 6 du premier mode, à ceci près que le joint torique n'est pas positionné à l'extrémité externe de la canalisation 6. Pour cela l'épaulement 52' en butée contre lequel est positionné le joint, est déporté du fond de l'alésage 51 vers l'entrée de celui-ci où il forme une rainure sur la face interne du connecteur mécanique qui génère un logement pour le joint 2. Tel que représenté la longueur de ce logement est inférieure au diamètre de la section du joint torique, qui déborde ainsi longitudinalement de ce logement. L'extrémité externe de la canalisation 6 est alors cylindrique sur toute sa partie qui entre dans l'alésage 51 du connecteur mécanique 5, avec un diamètre qui lui est légèrement inférieur pour faciliter son intromission et son retrait. L'étanchéité entre ces deux éléments est reportée au niveau de l'entrée de l'alésage 51.

En ce qui concerne l'extrémité externe de la canalisation 6 elle ne comporte plus de surépaisseur comme précédemment mais une simple collerette 62' dont le diamètre extérieur est supérieur à celui de l'alésage 51 du connecteur mécanique 5. La collerette 62' ne doit pas gêner l'encliquetage élastique des tourillons 8 dans les pinces 58. Compte tenu des tolérances de fabrication des pièces, le jeu entre la collerette et la face interne du connecteur doit être idéalement égale à 0 ou le plus petit possible lorsque les tourillons 8 sont montés dans les pinces 58. En effet, si la collerette 62' est en butée contre la face interne du connecteur mécanique avant le montage des tourillons, il ne sera pas possible d'assurer correctement l'encliquetage de ces derniers dans les pinces 58. La collerette est en contact avec le joint afin de le comprimer à la valeur souhaitée. Son diamètre dépasse en outre le diamètre du joint torique qui encercle l'extrémité externe de la canalisation 6. Enfin, comme pour le premier mode de réalisation, la collerette 62' comporte une face en tronc de cône 61' qui s'évase à partir du diamètre extérieur de la canalisation jusqu'au diamètre de l'épaulement 52'. Ainsi, lorsque le connecteur hydraulique est en place dans l'alésage 51 du connecteur mécanique 5, le joint torique 2 est en appui contre la paroi externe de l'épaulement 52' et comprimé par le coin en tronc de cône de la collerette 62'. Dans cette solution le joint torique 2 n'est pas pré-positionné dans le fond de l'alésage 51, comme précédemment, mais il est mis en place sur la canalisation 6 avant l'introduction de celle-ci dans l'alésage 51, son maintien sur cette canalisation étant assuré temporairement par son coefficient de friction.

On va maintenant décrire l'implantation d'un connecteur hydraulique 3 sur un connecteur mécanique 5, selon l'invention.

Dans le premier mode de réalisation le joint torique 2 est mis en place au fond de l'alésage 51, en butée contre l'épaulement 52, par effacement du bourrelet annulaire 53. Il est alors maintenu dans ce logement formé par l'épaulement 52 et le bourrelet annulaire 53, même en cas de mouvement du connecteur mécanique 5. L'opérateur engage ensuite la ou les canalisations 6 du connecteur hydraulique 3 (et éventuellement le connecteur électrique 4 qui lui est rattaché) dans le ou les alésages 51 correspondants et les déplace longitudinalement jusqu'à ce que les tourillons 8 viennent à l'entrée des pinces 58 du connecteur mécanique 5. Il exerce alors une force pour faire pénétrer ces canalisations dans les pinces en jouant sur l'élasticité des branches de ces pinces. Une fois passé le point dur correspondant à cet écartement des branches les tourillons 8 vont se placer au centre de l'ouverture circulaire des pinces, ce qui a pour effet de solidariser le connecteur hydraulique 3 avec le connecteur mécanique 5, mais aussi de comprimer le joint torique 2 du fait de la longueur existant entre le tronc de cône 61 de la canalisation et le centre de l'ouverture circulaire des pinces 58.

Le connecteur hydraulique est alors fixé de façon sûre sur le connecteur mécanique, sauf à exercer une traction importante sur lui pour faire passer à nouveau les tourillons 8 par les extrémités des pinces 58. L'étanchéité entre ces deux connecteurs est assurée du fait de la compression associée du joint torique 2.

L'implantation du connecteur hydraulique 3 dans le second mode de réalisation est analogue, à ceci près que le joint est placé sur la canalisation 6 avant le montage du connecteur hydraulique 3 sur le connecteur mécanique 5. Il est glissé, depuis l'extrémité externe de la canalisation 6 sur cette canalisation, jusqu'à venir en butée contre la collerette 62'. Le reste de l'opération s'effectue de la même façon que dans le premier mode avec une poussée longitudinale qui fait passer les tourillons 8 dans les pinces 58 et qui, simultanément, comprime le joint torique 2 entre la collerette 62' et l'épaulement 52' de l'alésage du connecteur mécanique 5.

## Revendications

1. Connecteur hydraulique (3) pour un système d'essuyage d'une vitre d'un véhicule, comportant au moins une canalisation (6) de circulation d'un liquide lave-vitre dont une extrémité est configurée pour s'insérer selon une direction dite axiale dans un alésage (51) d'un autre élément (5) dudit système,
**caractérisé en ce que** ladite extrémité comporte des moyens d'appui et de serrage axial (61, 61') configurés pour coopérer avec un joint d'étanchéité destiné à être monté dans ledit alésage.

2. Connecteur hydraulique selon la revendication 1 dans lequel lesdits moyens comprennent au moins une surépaisseur radiale (62, 62').

3. Connecteur hydraulique selon la revendication 2 dans lequel ladite surépaisseur comporte au moins une face annulaire de butée (61, 61') pour ledit joint.

4. Connecteur hydraulique selon la revendication 3 dans lequel ladite face de butée est positionnée à une extrémité axiale de ladite canalisation (6).

5. Connecteur hydraulique selon la revendication 3 dans lequel ladite face de butée est positionnée à distance d'une extrémité axiale de ladite canalisation (6).

6. Connecteur hydraulique selon l'une des revendications 3 à 5 dans lequel ladite face de butée a une forme en tronc de cône (61, 61').

7. Connecteur hydraulique selon l'une des revendications 1 à 6 comprenant en outre, à distance de ladite extrémité des moyens d'encliquetage élastique configurés pour coopérer avec des moyens (58) complémentaires dudit un autre élément (5).

8. Ensemble formé d'un connecteur hydraulique (3) selon l'une des revendications 1 à 7, d'un connecteur mécanique (5) et d'un joint annulaire d'étanchéité (2), ledit connecteur mécanique (5) comportant un alésage (51) muni d'un épaulement (52, 52'), ledit joint étant configuré pour être serré entre ledit épaulement du connecteur mécanique (5) et lesdits moyens d'appui et de serrage dudit connecteur hydraulique (3), lorsque ladite extrémité de la canalisation (6) est insérée dans ledit alésage.

9. Ensemble selon la revendication 8 dans laquelle les diamètres intérieur et extérieur du joint torique (2) sont sensiblement égaux à ceux, respectivement, de l'alésage (51) et de l'épaulement (52, 52').

10. Ensemble selon l'une des revendications 8 à 9 dans lequel le connecteur mécanique porte des premiers moyens de support (58) aptes à coopérer avec des seconds moyens de support (8) portés par le connecteur hydraulique (3) pour immobiliser ledit connecteur hydraulique en translation longitudinale par rapport audit connecteur mécanique, la distance entre lesdits premiers moyens de support et l'épaulement (52, 52') de l'alésage (51) étant telle que la coopération des premiers et seconds moyens de support entraîne une compression, à un taux prédéfini, du joint d'étanchéité (2) contre ledit épaulement.

11. Ensemble selon la revendication 10 dans lequel ladite face de butée (61) est positionnée à ladite extrémité de la canalisation (6) et l'épaulement (52) est positionné en fond de l'alésage (51).

12. Ensemble selon la revendication 10 dans lequel ladite face de butée (61') est positionnée à distance de ladite extrémité de la canalisation (6) et l'épaulement (52') forme une rainure dans une face interne dudit connecteur mécanique (5).

13. Ensemble selon l'une des revendications 8 à 12 dans lequel ledit alésage (51) comporte un bourrelet annulaire (53) de retenue axiale du joint (2).

14. Balai d'essuie-glace d'un véhicule, **caractérisé en ce qu'**il comprend un ensemble selon l'une des revendications 8 à 13 pour son alimentation en liquide lave-vitre.

## Patentansprüche

1. Hydraulischer Anschluss (3) für ein Wischersystem einer Fahrzeugscheibe, umfassend mindestens eine Leitung (6) zur Zirkulation einer Scheibenwaschflüssigkeit, deren eines Ende so ausgebildet ist, dass es in einer Bohrung (51) eines anderen Elements (5) des Systems in axialer Richtung eingefügt werden kann,
**dadurch gekennzeichnet, dass** das Ende axiale Stütz- und Klemmmittel (61, 61') aufweist, die dazu ausgelegt sind, mit einer zur Montage in die Bohrung vorgesehenen Dichtung zusammenzuwirken.

2. Hydraulischer Anschluss gemäß Anspruch 1, wobei die Mittel mindestens eine radiale Verdickung (62, 62') umfassen.

3. Hydraulischer Anschluss gemäß Anspruch 2, wobei die Verdickung mindestens eine ringförmige Anschlagfläche (61, 61') für die Dichtung umfasst.

4. Hydraulischer Anschluss gemäß Anspruch 3, wobei die Anschlagfläche an einem axialen Ende der Leitung (6) angeordnet ist.

5. Hydraulischer Anschluss gemäß Anspruch 3, wobei die Anschlagfläche mit einem Abstand von einem axialen Ende der Leitung (6) angeordnet ist.

6. Hydraulischer Anschluss gemäß einem der Ansprüche 3 bis 5, wobei die Anschlagfläche eine Kegelstumpf-Form (61,61') aufweist.

7. Hydraulischer Anschluss gemäß einem der Ansprüche 1 bis 6, ferner umfassend, mit einem Abstand von dem Ende, Mittel zum elastischen Einrasten, die dazu ausgelegt sind, mit den komplementären Mitteln (58) des einen anderen Elements (5) zusammenzuwirken.

8. Baugruppe, bestehend aus einem hydraulischen Anschluss (3) gemäß einem der Ansprüche 1 bis 7, einem mechanischen Anschluss (5) und einem Dichtungsring (2), wobei der mechanische Anschluss (5) eine Bohrung (51) aufweist, die mit einem Absatz (52, 52') versehen ist, wobei die Dichtung so ausgebildet ist, dass sie zwischen dem Absatz des mechanischen Anschlusses (5) und den Stütz- und Klemmmitteln des hydraulischen Anschlusses (3) eingeklemmt wird, wenn das Ende der Leitung (6) in die Bohrung eingefügt wird.

9. Baugruppe gemäß Anspruch 8, wobei der Innen- und Außendurchmesser des O-Rings (2) im Wesentlichen gleich denen der Bohrung (51) bzw. des Absatzes (52, 52') sind.

10. Baugruppe gemäß einem der Ansprüche 8 bis 9, wobei der mechanische Anschluss erste Stützmittel (58) umfasst, die in der Lage sind, mit zweiten Stützmitteln (8) zusammenzuwirken, mit denen der hydraulische Anschluss (3) versehen ist, um den hydraulischen Anschluss bezüglich des mechanischen Anschlusses in Längsverschiebung zu fixieren, wobei der Abstand zwischen den ersten Stützmitteln und dem Absatz (52, 52') der Bohrung (51) derart ist, dass das Zusammenwirken der ersten und zweiten Stützmittel zu einer Kompression der Dichtung (2) gegen den Absatz in einer vorbestimmten Menge führt.

11. Baugruppe gemäß Anspruch 10, wobei die Anschlagfläche (61) am Ende der Leitung (6) positioniert ist und der Absatz (52) am Boden der Bohrung (51) positioniert ist.

12. Baugruppe gemäß Anspruch 10, wobei die Anschlagfläche (61') mit einem Abstand von dem Ende der Leitung (6) positioniert ist und der Absatz (52') eine Nut in einer Innenfläche des mechanischen Anschlusses (5) bildet.

13. Baugruppe gemäß einem der Ansprüche 8 bis 12, wobei die Bohrung (51) einen ringförmigen Wulst (53) zum axialen Zurückhalten der Dichtung (2) aufweist.

14. Scheibenwischerblatt eines Fahrzeugs, **dadurch gekennzeichnet, dass** es eine Baugruppe gemäß einem der Ansprüche 8 bis 13 für seine Versorgung mit Scheibenwaschflüssigkeit umfasst.

## Claims

1. Hydraulic connector (3) for a system for wiping a windscreen of a vehicle, comprising at least one screenwash liquid circulation duct (6) of which one end is configured to be inserted in a direction, called the axial direction, into a bore (51) of another element (5) of the said system,
**characterized in that** the said end comprises axial bearing and clamping means (61, 61') configured to cooperate with a seal intended to be mounted in the said bore.

2. Hydraulic connector according to Claim 1, in which the said means comprise at least one radial overthickness (62, 62').

3. Hydraulic connector according to Claim 2, in which the said overthickness comprises at least one annular stop face (61, 61') for the said seal.

4. Hydraulic connector according to Claim 3, in which the said stop face is positioned at an axial end of the said duct (6).

5. Hydraulic connector according to Claim 3, in which the said stop face is positioned at a distance from an axial end of the said duct (6).

6. Hydraulic connector according to one of Claims 3 to 5, in which the said stop face has a truncated cone shape (61, 61').

7. Hydraulic connector according to one of Claims 1 to 6, additionally comprising, at a distance from the said end, elastic snap-fastening means configured to cooperate with complementary means (58) of the said one other element (5).

8. Assembly formed by a hydraulic connector (3) according to one of Claims 1 to 7, by a mechanical connector (5) and by an annual seal (2), the said mechanical connector (5) comprising a bore (51) provided with a shoulder (52, 52'), the said seal being configured to be clamped between the said shoulder of the mechanical connector (5) and the said bearing and clamping means of the said hydraulic connector (3) when the said end of the duct (6) is inserted into the said bore.

9. Assembly according to Claim 8, in which the inside and outside diameters of the O-ring seal (2) are substantially equal to those of the bore (51) and of the shoulder (52, 52'), respectively.

10. Assembly according to either of Claims 8 and 9, in which the mechanical connector bears first support means (58) able to cooperate with second support means (8) borne by the hydraulic connector (3) in order to immobilize the said hydraulic connector in longitudinal translation with respect to the said mechanical connector, the distance between the said first support means and the shoulder (52, 52') of the bore (51) being such that the cooperation of the first and second support means results in a compression, to a predefined degree, of the seal (2) against the said shoulder.

11. Assembly according to Claim 10, in which the said stop face (61) is positioned at the said end of the duct (6) and the shoulder (52) is positioned at the bottom of the bore (51).

12. Assembly according to Claim 10, in which the said stop face (61') is positioned at a distance from the said end of the duct (6) and the shoulder (52') forms a groove in an internal face of the said mechanical connector (5) .

13. Assembly according to one of Claims 8 to 12, in which the said bore (51) comprises an annular bead (53) for axially retaining the seal (2).

14. Windscreen wiper of a vehicle, **characterized in that** it comprises an assembly according to one of Claims 8 to 13 so that it can be supplied with screenwash liquid.
